# EUROPÄISCHE PATENTSCHRIFT

(11) **EP 3 156 383 B1**
(45) Veröffentlichungstag und Bekanntmachung des Hinweises auf die Patenterteilung: **18.07.2018**
(21) Anmeldenummer: 16193025.0
(22) Anmeldetag: 10.10.2016
(51) Int. Cl.: C04B 28/04, C04B 28/06, C04B 38/10

(54) **VERFAHREN ZUR HERSTELLUNG EINES ANORGANISCHEN SCHAUMES**
METHOD FOR PRODUCING AN INORGANIC FOAM
PROCÉDÉ DE FABRICATION D'UNE MOUSSE INORGANIQUE

(30) Priorität: 16.10.2015 DE 102015013396
(43) Veröffentlichungstag der Anmeldung: 19.04.2017
(73) Patentinhaber: IAB Institut für Angewandte Bauforschung Weimar gGmbH, 99428 Weimar (DE)
(72) Erfinder: Höchst, Attila, 99425 Weimar (DE)
(74) Vertreter: Patentanwälte Geyer, Fehners & Partner mbB

(56) Entgegenhaltungen:
- EP-A1- 0 078 508
- WO-A1-2013/150148
- DE-A1-102010 062 762

## Beschreibung

### Gebiet der Erfindung

Die Erfindung betrifft ein Verfahren zur Herstellung eines mineralischen Schaumes und dessen Zusammensetzung.

Auf die globale Entwicklung der sich verringernden fossilen Energieressourcen und der damit einhergehenden Umweltbelastungen wurde mit der Novellierung einer Energieeinsparverordnung (Verordnung über energiesparenden Wärmeschutz und energiesparende Anlagentechnik bei Gebäuden) reagiert. Im Bereich der Wandbaustoffhersteller führte die baustoffliche Weiterentwicklung zum Bestreben nach minimierten Wärmeleitfähigkeiten, die von diesen Herstellern durch ein Verfüllen der Wandbaustoffe mit Wärmedämmstoffen erfolgt.

Bei der Wärmedämmung sollten Materialien gewählt werden, die selbst umweltschonend sind und nicht bei ihrer Herstellung oder aufgrund ihrer chemischen Zusammensetzung Schadstoffe enthalten bzw. freisetzen, die entweder zum Treibhauseffekt beitragen oder gesundheitsschädigende Auswirkungen über ihren Lebenszyklus haben.
Bei gesamtökonomischer Betrachtung muss vorausgesetzt werden, dass ein Dämmstoff mehr Energie einspart als zu seiner Herstellung bzw. für seine Wiederverwertung aufzubringen ist.

### Stand der Technik

Allgemein wird das Ziel verfolgt, ohne aufwändige und oft auch kostspielige Zusatzdämmung rationell einen niedrigen Wärmedurchgangskoeffizienten eines Wandbaustoffs zu erreichen. Zur Verringerung der Wärmeleitfähigkeit von Wandbaustoffen werden in diese Hohlkammern eingebracht und mit wärmeisolierenden Dämmstoffen verfüllt. Dies geschieht bei Ziegelmauerwerk zum einen durch einen hochporösen Ziegelscherben und zum anderen durch das Verfüllen der Ziegelhohlkammern mit zusätzlichem Wärmedämmmaterial.

Einen hohen Marktanteil nehmen dabei Dämmstoffe auf mineralischer Basis ein, wie beispielsweise Perlit oder Mineralwolle. Diese Füllstoffe werden in einem kostenintensiven Hochtemperaturprozess hergestellt.

Neben mineralischen Dämmstoffen werden auch Dämmstoffen auf organischer Basis, wie z.B. Polystyrol oder Phenolharz, eingesetzt. Diese Dämmstoffe verfügen meist über eine deutlich geringere Wärmeleitfähigkeit, sind aber ökologisch und hinsichtlich ihrer Recyclingfähigkeit als bedenklich einzuschätzen.

Für das Füllen von Ziegelhohlkammern gibt es verschiedene Verfahren. Bei den meisten gängigen Verfahren erfolgt das Einbringen der Dämmung zwischen dem Ziegelplanschliff und der Palettierung bzw. Verpackung. Ein bekanntes Füllverfahren ist das Einsetzen von blockförmig ausgebildetem Dämmmaterial. Die Blöcke werden entsprechend der Hohlkörpergeometrie, meist geringfügig kleiner, aus dem entsprechenden Dämmstoff ausgeschnitten und in den Ziegelhohlkammern kraftschlüssig eingesteckt. Es ist ebenfalls möglich, die vorbereiteten Dämmstoffelemente durch das Erzeugen eines Unterdruckes in die Ziegelkammern einzusaugen. Hierzu werden die Dämmstoffabschnitte in Kanäle geschoben, der Ziegelstein vor den Kanälen positioniert und die Abschnitte in die Dämmkanäle des Ziegels eingesaugt.

Eine weitere Möglichkeit Hohlkammern von Wandbaustoffen zu füllen, besteht in der Nutzung schütt- und blasfähiger Stoffe wie z.B. Mineralfasern, Perlit, Blähglas, Bims, Polystyrolpartikel und Zellulosefasern. Bindemittel verkleben die Dämmstoffpartikel untereinander und sichern sie darüber hinaus vor dem Herausfallen aus den Ziegelhohlkammern. Als Bindemittel werden meist Wassergläser, Kieselsol, Silane, Kunststoffdispersionen, Phenolharze oder Thermoplasten eingesetzt. Die Trocknung und Aushärtung der Bindemittel erfolgt entweder ohne zusätzliche Energiezufuhr oder mit zusätzlicher Energiezufuhr (z.B. Nutzung von Wärmestrahlung). Anschließend kann die Füllung des Ziegels oberflächlich imprägniert werden, um die Wasserabweisung zu verbessern.

Für die Eignung eines Füllstoffes als Dämmmaterial ist es notwendig, dass dieser eine hohe Porosität aufweist. Um dies zu erreichen, wird in das Material ein möglichst hoher Anteil an Luft bzw. Gas eingebracht. Dies geschieht bekanntlich durch die Erhöhung der Korn, Haufwerks- bzw. Matrixporosität eines Werkstoffes. Durch den steigenden Porenanteil (Porosität) sinken die Trockenrohdichte und im Allgemeinen auch die Wärmeleitfähigkeit.

Ein Zementleim kann chemisch und/oder physikalisch aufgeschäumt werden. Chemisch geschäumter Zementleim wird im Allgemeinen mit der Anwesenheit von Aluminiumpulver hergestellt. In einer chemischen Reaktion mit den Klinkerphasen des Zementes entsteht ein Treibgas, das den Zementleim aufschäumen lässt. Beim physikalischen Aufschäumen kann dem Zementleim ein vorgefertigter Schaum zugegeben und untergemischt werden, der in einem Schaumgenerator aus Wasser, Gas und einem Schaummittel hergestellt werden kann. Eine andere bekannte Variante ist ein direktes Aufschäumen des Zementleimes, der bereits das Schaummittel enthält. Vorbekannt sind Schaummittel auf Basis von Tensiden oder Proteinen.

Aus dem Stand der Technik sind mineralische Schäume mit geringen Dichten und geringen Wärmeleitfähigkeiten bekannt. In WO 2011/044605 A1 wird eine Formulierung zur Herstellung eines mineralischen Dämmschaumes auf Basis eines hydraulisch abbindenden und eines puzzolanischen Bindemittels beschrieben, der ein Trockengewicht von maximal 300 kg/m³ aufweist. Als hydraulisches Bindemittel wird ein Sulfat-Aluminat-Zement eingesetzt, der eine Sulfat- und Aluminatkomponente enthält, und in einem Anteil von zumindest 50 Gewichtsteilen enthalten ist.

In DE 10 2010 062 762 A1 wird ein Verfahren zur Herstellung eines Schaumbetons mit einer Trockendichte von weniger als 400 kg/m³ beschrieben, wobei ein Zementleim und ein Proteinschaum separat hergestellt und anschließend miteinander vermischt werden. Der Proteinschaumbildner besteht aus unpolaren und polaren Aminosäuren.

Aus der Dissertation von Dr.-Ing. Jens Uwe Pott "Entwicklungsstrategien für zementgebundene Schäume", Universität Hannover 2006, ist vorbekannt, dass bei der Herstellung stabiler Zementschäume Luftgehalte von maximal 65 Vol.-% und Frischrohdichten von ca. 600 bis 650 kg/m³ erreicht werden können. Durch eine anschließende Austrocknung verringerte sich die Rohdichte nochmals um ca. 100 bis 150 kg/m³. In Ausnahmefällen konnten noch geringere Festrohdichten bis ca.400 kg/m³ erreicht werden, jedoch wiesen diese Zementschäume keine technisch nutzbaren Festigkeiten auf.

In DE 197 08 779 A1 wird ein bindemittelgebundener Schaum und dessen Herstellung beschrieben, der einen industriellen Anfallstoff als wesentlichen Bestandteil enthält. Bei dem Anfallstoff handelt es sich um einen Ziegelmehlstaub, der aus der Planziegelherstellung und/oder beim Ziegelrecycling anfällt. Der Ziegelmehlstaub weist ein Größtkorn von 5 mm oder weniger auf. Die Herstellung des Ziegelleichtschaumes erfolgt in 2 Verfahrensschritten. Zuerst werden das Ziegelmehl, die Bindemittel, die Schaummittel, die Zusatzmittel und gegebenenfalls ein Erstarrungsbeschleuniger mit Wasser zu einer Suspension vermischt. Anschließend wird diese Suspension mit Druckluft aufgeschäumt.

Aus DE 2007 031 365 B4 ist bekannt, dass ein Baustein mit einem Lochbild aus Hohlräumen mit einem porosierten Schaumbeton befüllt wird. Dieser ist gekennzeichnet durch eine wasserabweisende Sperrschicht zwischen der Wandung des Hohlraums und der Schaumbetonfüllung, wobei diese Sperrschicht beispielsweise eine hydrophobe Beschichtung auf Basis einer Silikonöl-Suspension oder eines pflanzlichen Öls sein kann.

WO 2013/150148 A1 offenbart ein Verfahren zur Herstellung eines anorganischen Schaumes mit einer Trockenrohdichte geringer als 400 kg/m3, gekennzeichnet durch die Verfahrensschritte: a) Herstellung eines ersten Bindemittelleims, dessen Hauptbestandteile ein Portland Zement und Wasser sind; b) separate Herstellung eines zweiten Bindemittelleims, dessen Hauptbestandteile ein Calciumaluminatzement und Wasser sind und der sich in seiner Zusammensetzung vom ersten Bindemittelleim unterscheidet; c) Zusammenführung und Homogenisierung der getrennt erzeugten ersten und zweiten Zementleime mit einem separat hergestellten Schaum zu einem Produktschaum.

Die vorbekannten Verfahren zur Herstellung der mineralischen Schäume und deren Zusammensetzungen weisen den Nachteil auf, dass die Schäume bis zur ihrer Erstarrung einer längeren Verweilzeit unterliegen. Erst nach Erreichen einer gewissen Erstarrungszeit und damit einer ausreichenden Formstabilität des Schaumes können die verfüllten Bausteine/Wandbaustoffe transportiert und paketiert werden.

### Beschreibung der Erfindung

Der Erfindung liegt daher die Aufgabe zugrunde, ein Verfahren zur Herstellung eines mineralischen Schaumes und dessen Schaumzusammensetzung zur Verfügung zu stellen, wobei das Verfahren eine kurze Erstarrungszeit des Schaumes gewährleistet und mit dem eine kontinuierliche Verfüllung von Wandbaustoffen und anschließender Paketierung gewährleistet werden kann.

Diese Aufgabe wird durch ein Verfahren gemäß Anspruch 1 gelöst. Weitere vorteilhafte Ausgestaltungen des Verfahrens sind in den abhängigen Ansprüchen aufgeführt.

Zur Lösung dieser Aufgabe sieht die Erfindung ein Verfahren zur Herstellung eines mineralischen Schaumes mit folgenden Schritten vor:
a) Herstellung eines ersten Bindemittelleimes bestehend aus Wasser, Schaumgeber und Zement,
b) Herstellung eines zweiten Bindemittelleimes bestehend aus Wasser, Schaumgeber und Härterzement,
c) Aufschäumen des ersten Bindemittelleimes zu einem erstem Zementschaum,
d) Aufschäumen des zweiten Bindemittelleimes zu einem zweitem Zementschaum, vorzugsweise einem Härterzementschaum,
e) Zusammenführen und Homogenisieren der Zementschäume zu einem Produktschaum.

An die Herstellung an schließen sich ggf. die beiden folgenden Verfahrensschritte, die bereits den fertigen Produktschaum verwenden:
f) Verfüllen des Produktschaumes in Hohlräume, Wandbausteine etc.,
g) Erstarrung des Produktschaumes in Abhängigkeit des Mischungsverhältnisses von Zementschaum und Härterzementschaum.

Zur Aufschäumung des ersten und/oder zweiten Bindemittelleims können diese voneinander getrennt in zumindest eine geschlossene Kammer eingebracht werden, wobei die Kammer während des Einbringens in eine oszillierende Bewegung versetzt wird. Mit diesem Verfahren kann eine vorteilhafte Möglichkeit geschaffen werden, einen Stoff aufzuschäumen, ohne dass ein in die Mischeinrichtung rotierendes Werkzeug hineinragt und eine Erwärmung des entstandenen Schaumes erfolgen kann.

Als Schaumgeber wird vorzugsweise ein durch Proteinhydrolyse gewonnenes Keratin verwendet. Ebenso können Schaumgeber auf Basis von Tensiden oder eine Kombination von Tensiden und Proteinen eingesetzt werden.

Das in einem Zementschaum enthaltende Bindemittel ist ein herkömmlicher Portlandzement vorzugsweise der Festigkeitsklasse 52,5. Bei dem Härterzementschaum wird ein calciumaluminatisches Bindemittel verwendet, das beim Vermischen mit dem Portlandzement und der anschließenden Reaktion zu einer frühen Erstarrung des Produktschaumes führt.

In den Verfahrensschritten (a) und (b) können den Bindemittelleimen inerte, puzzolanische oder latent-hydraulische Zusatzstoffe, sowie weitere Zusatzmittel, wie Netz-, Fließ- oder Hydrophobierungsmittel bzw. Stabilisatoren zugegeben werden.

Jedes der beiden Bindemittel wird mit seinen weiteren Mischungshauptbestandteilen Wasser und erstem bzw. zweitem Schaumgeber separat in einem Mischer, vorzugsweise in einem Suspensionsmischer zu einem ersten bzw. zweiten Bindemittelleim oder homogen vermischt und in jeweils einem Vorratsbehälter zur späteren Verschäumung zwischengelagert. Über eine Fördereinrichtung werden die beiden Bindemittelleime jeweils einem Schaummischer zugeführt und zum ersten und zum zweiten Zementschaum aufgeschäumt. Die beiden Zementschäume werden anschließend in einer Mischeinrichtung homogenisiert und zum Einsatzort gefördert. Der aus den zwei Einzelschäumen hergestellte Produktschaum erstarrt in Abhängigkeit des Mischungsverhältnisses von erstem Zementschaum und zweiten Zementschaum, vorzugsweise dem Härterzementschaum, wobei eine Erhöhung des Anteils an Härterzementschaum zu einer früheren Erstarrung führt.

Das Verfahren eignet sich sowohl zur Verfüllung von Wandbaustoffen, wie Ziegeln, Betonsteinen, Kalksandsteinen, als auch zu Wand- und Deckenverfüllungen sowie zur Verfüllung sonstiger Hohlräume und zur Blocksteinherstellung.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

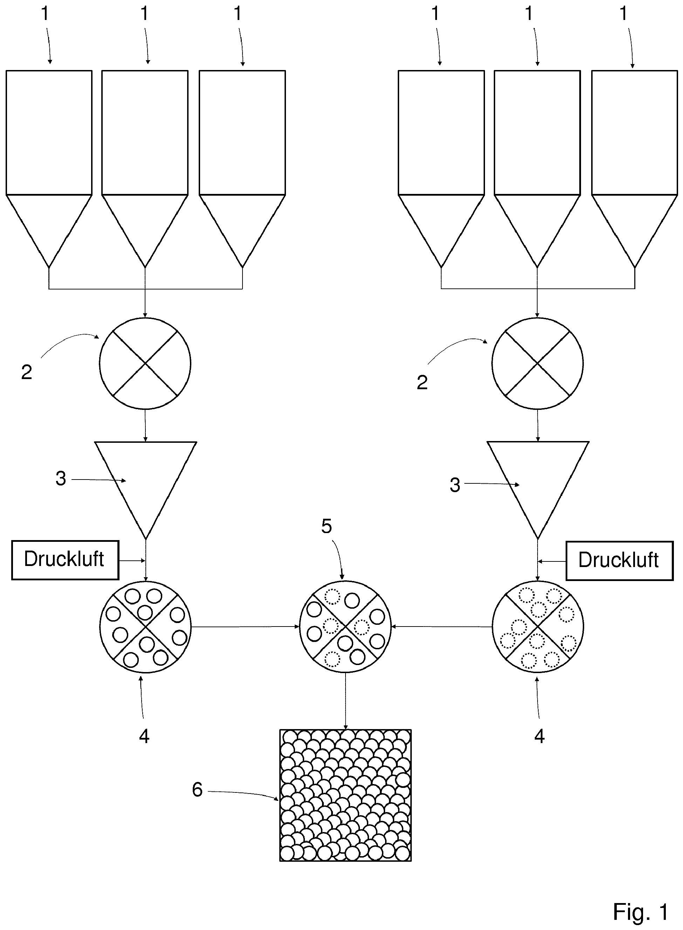

Das erfindungsmäßige Verfahren wird weiterhin beispielsweise anhand folgender Ausführungsbeispiele näher erläutert. Es zeigt
- Fig. 1: ein Ablaufschema des Verfahrens.

### Ausführliche Beschreibung der Zeichnungen

Fig. 1 zeigt beispielhaft den Verfahrensablauf für die Herstellung eines anorganischen Schaumes, welcher eine Trockenrohdichte von weniger als 400 kg/m³ aufweist. Dazu werden unabhängig voneinander, d.h. räumlich getrennt, ein erster und ein zweiter Bindemittelleim hergestellt. Die Ausgangsstoffe werden in Vorratsbehältern 1 gelagert. Beispielhaft sind hier für jeden der beiden Bindemittelleime drei Vorratsbehälter 1 gezeigt, in denen die Hauptbestandteile, nämlich ein erster bzw. zweiter Zement, Wasser und mindestens ein erster bzw. zweiter Schaumgeber gelagert werden. Weitere Nebenbestandteile, wie beispielsweise Ziegelstaub oder puzzolanische Zusatzstoffe, können in weiteren, nicht gezeigten Vorratsbehältern 1 gelagert werden.

In einer Mischstrecke 2 werden die Haupt- und ggf. die Nebenbestandteile zusammengeführt und vermischt, wobei für jeden der beiden Bindemittelleime eine eigene Mischstrecke 2 vorgesehen ist. Nach dem Mischen werden die Bindemittelleime jeweils getrennt in Vorratsbehälter 3 gefüllt und dort zur späteren Verschäumung zwischengelagert.

Zur endgültigen Verarbeitung werden dann beide Bindemittelleime jeweils in Schaummischern 4 zu Zementschäumen aufgeschäumt, hier unter der Zuführung von Druckluft. Beide Zementschäume werden dann in einer weiteren Mischstrecke 5 zusammengeführt und miteinander vermischt. Der dabei gebildete Produktschaum 6 kann anschließend verfüllt werden, beispielsweise in Wandbausteine, bevor der Aushärtevorgang beginnt.

In einem ersten Ausführungsbeispiel verwendet man als Hauptbestandteile für den ersten Bindemittelleim 70 kg Wasser, als ersten Zement 76 kg Portlandzement der Festigkeitsklasse 52,5 R sowie 3,9 kg Protein als ersten Schaumgeber, und als Hauptbestandteile für den zweiten Bindemittelleim 17 kg Wasser, 19 kg Calciumaluminatzement als zweiten Zement und Härterzement sowie 0,9 kg Protein als zweiten Schaumgeber.

Durch Aufschäumen und Zusammenfügen der Einzelschäume entsteht etwa ein Kubikmeter Frischzementschaum mit einer Frischrohdichte von ca. 190 kg/m³ und einer Trockenrohdichte von ca. 100 kg/m³. Das Mischungsverhältnis von Zementschaum und Härterzementschaum beträgt in diesem Ausführungsbeispiel ca. 4:1, was zu einem Erstarrungsbeginn von etwa 8-10 min führt.

In einem zweiten Ausführungsbeispiel verwendet man als Hauptbestandteile für den ersten Bindemittelleim wieder 70 kg Wasser, als ersten Zement 76 kg Portlandzement der Festigkeitsklasse 52,5 R sowie 3,9 kg Protein als ersten Schaumgeber, und als Hauptbestandteile für den zweiten Bindemittelleim 23 kg Wasser, 25 kg Calciumaluminatzement als zweiten Zement und Härterzement sowie 1,3 kg Protein als zweiten Schaumgeber.

Nach diesem Ausführungsbeispiel entsteht etwa ein Kubikmeter Frischzementschaum mit einer Frischrohdichte von ca. 180 kg/m³ - 200 kg/m³ und einer Trockenrohdichte von ca. 100 kg/m³. Das Mischungsverhältnis von Zementschaum und Härterzementschaum beträgt ca. 3:1, was zu einem Erstarrungsbeginn von ca. 5 min führt.

Der erste Zement weist vorzugsweise auch eine hohe Mahlfeinheit auf, d.h. eine massebezogenen Oberfläche nach Blaine von mehr als 5.000 cm²/g.

Ca. 5 bis 10 Minuten nach dem Erstarrungsbeginn wird das Erstarrungsende erreicht und der Frischzementschaum kann geschnitten werden. Dies geschieht vorzugsweise mit einem Draht oder einem Messer. Die mit dem Produktschaum verfüllten Wandbaustoffe sind spätestens nach dem Erstarrungsende paketierbar. Dies erlaubt eine kontinuierliche Verfüllung der Wandbaustoffe in hoher Stückzahl.

Der Erstarrungsbeginn und das Erstarrungsende sind ferner auch von anderen Faktoren wie der Temperatur der Ausgangsstoffe abhängig. So kann beispielsweise über die Temperatur des Anmachwassers der Beginn und das Ende der Erstarrung zusätzlich verändert werden. Mit dem erfindungsgemäßen Verfahren lässt sich ein Produktschaum mit Trockenrohdichten von 75 bis 400 kg/m³ herstellen. Diese Trockenrohdichten werden innerhalb von 72 h bei 20 °C und 65 % relativer Luftfeuchtigkeit nach dem Erstarrungsbeginn erreicht.

Der Produktschaum weist im nicht erstarrten Zustand eine hohe Elastizität und Formstabilität auf, so dass dieser bis zum Erstarrungsbeginn auf Förderbändern oder anderen offenen Fördersystemen transportierbar ist.

Ein weiterer Vorteil des Zementschaumes ist seine Recyclingfähigkeit, da mit Ausnahme des natürlichen Proteins nur anorganische Ausgangsstoffe verwendet werden. Damit schränkt der Zementschaum das Recycling von Wandbaustoffen, die mit diesem verfüllt sind, nicht ein. Ferner ist ein aufwändiges Trennen des Wandbaustoffes vom Dämmmaterial, wie es von mineralwolle- und perlitgefüllten Wandbaustoffen bekannt ist, nicht nötig.

### Bezugszeichenliste:

- 1: Vorratsbehälter der Ausgangsstoffe
- 2: Mischstrecke
- 3: Vorratsbehälter der Bindemittelleime
- 4: Schaummischer
- 5: Mischstrecke
- 6: Produktschaum

## Patentansprüche

1. Verfahren zur Herstellung eines anorganischen Schaumes mit einer Trockenrohdichte geringer als 400 kg/m³, **gekennzeichnet durch** die Verfahrensschritte
a) Herstellung eines ersten Bindemittelleims, dessen Hauptbestandteile ein erster Zement, Wasser und mindestens ein erster Schaumgeber sind;
b) separate Herstellung eines zweiten Bindemittelleims, dessen Hauptbestandteile ein zweiter Zement, Wasser und mindestens ein zweiter Schaumgeber sind und der sich in seiner Zusammensetzung vom ersten Bindemittelleim unterscheidet;
c) Aufschäumen des ersten Bindemittelleims zu einem ersten Zementschaum;
d) Aufschäumen des zweiten Bindemittelleims zu einem zweiten Zementschaum, dessen Zusammensetzung sich vom ersten Zementschaum unterscheidet;
e) Zusammenführung und Homogenisierung der getrennt erzeugten ersten und zweiten Zementschäume zu einem Produktschaum (6).

2. Verfahren nach Anspruch 1, **dadurch gekennzeichnet, dass** als zweiter Zement ein Härterzement verwendet wird und der zweite Bindemittelleim zu einem Härterzementschaum aufgeschäumt wird.

3. Verfahren nach einem der Ansprüche 1 oder 2, **dadurch gekennzeichnet, dass** der Produktschaum (6) eine Trockenrohdichte von 75 bis 400 kg/m³ vorzugsweise kleiner als 120 kg/m³ und eine Wärmeleitfähigkeit von ≤ 0,045 W/mK aufweist.

4. Verfahren nach einem der Ansprüche 1 bis 3, **dadurch gekennzeichnet, dass** mindestens einer der beiden Schaumgeber ein Proteinhydrolysat, vorzugsweise auf Basis von Keratin, ist, oder auf Tensiden basiert, oder auf einer Kombination von beiden basiert.

5. Verfahren nach einem der Ansprüche 2 bis 4, **dadurch gekennzeichnet, dass** als erster Zement ein Portlandzement vorzugsweise mit hoher Mahlfeinheit und/oder der Festigkeitsklasse 52,5 verwendet wird, und als Härterzement ein Calciumaluminatzement, vorzugsweise basierend auf Dodecacalcium-Heptaaluminat, verwendet wird.

6. Verfahren nach Anspruch 5, **dadurch gekennzeichnet, dass** der Calciumaluminatzement eine Sulfatkomponente enthält oder mit einer solchen kombiniert wird.

7. Verfahren nach den Ansprüchen 5 oder 6, **dadurch gekennzeichnet, dass** der Calciumaluminatzement aus einem Klinker hergestellt wird, der werkseitig gemeinsam mit einem Erstarrungsregler auf eine hohe Mahlfeinheit gemahlen wird.

8. Verfahren nach einem der Ansprüche 5 bis 7, **dadurch gekennzeichnet, dass** das Verhältnis von Portlandzement zu Calciumaluminatzement in einem Bereich mit einer oberen Grenze von 5:1 und einer unteren Grenze von 1:1, vorzugsweise bei 3:1, liegt.

9. Verfahren nach einem der Ansprüche 1 bis 8, **dadurch gekennzeichnet, dass** mindestens einem der beiden Zementschäume ein Ziegelstaub als Nebenbestandteil von ≤ 20 %, vorzugsweise 4 bis 6 % zugegeben wird.

10. Verfahren nach einem der Ansprüche 1 bis 9, **dadurch gekennzeichnet, dass** in den Verfahrensschritten a) und / oder b) als Nebenbestandteile inerte und/oder puzzolanische und/oder latent-hydraulische Zusatzstoffe und/oder Netz-, Fließ-, Hydrophobierungsmittel oder Stabilisatoren verwendet werden.

11. Verfahren nach einem der Ansprüche 1 bis 10, **dadurch gekennzeichnet, dass** das Aufschäumen in einer oszillierenden Kammer ohne Verwendung eines rotierenden Werkzeugs erfolgt.

12. Verfahren nach einem der Ansprüche 1 bis 11, **dadurch gekennzeichnet, dass** als Hauptbestandteile des ersten Bindemittelleims 70 kg Wasser, 76 kg Portlandzement 52,5 R und 3,9 kg Protein, und als Hauptbestandteile des zweiten Bindemittelleims 17 kg Wasser, 19 kg Calciumaluminatzement und 0,9 kg Protein verwendet werden.

13. Verfahren nach einem der Ansprüche 1 bis 11, **dadurch gekennzeichnet, dass** als Hauptbestandteile des ersten Bindemittelleims 70 kg Wasser, 76 kg Portlandzement 52,5 R und 3,9 kg Protein, und als Hauptbestandteile des zweiten Bindemittelleims 23 kg Wasser, 25 kg Calciumaluminatzement und 1,3 kg Protein verwendet werden.

14. Verwendung eines Produktschaums, welcher nach den Verfahrensschritten nach einem der Ansprüche 1 bis 13 hergestellt wird, zur Verfüllung von Hohlräumen vorzugsweise von Wandbaustoffen verschiedener Materialien, zur Verfüllung von Wand-und Deckenelementen, zur Blocksteinherstellung und zur Herstellung von Isoliermaterial.

## Claims

1. Process for producing inorganic foam having a dry density of less than 400 kg/m³, characterized through process steps
a) Preparation of a first binding agent whose main components are at first cement, water and at least one foaming agent;
b) Separate preparation of a second binder paste whose main components are a second cement, water and at least one second foaming agent which differs in composition from the first binder paste;
c) Foaming of the first binder paste into first cement foam;
d) Foaming of the second binder paste into second cement foam whose composition is different from the first cement foam;
e) Merging and homogenizing of the separately produced first and second cement foams into product foam (6).

2. A method according to claim 1, **characterized by** the use of hardening cement as second cement and the second binder is foamed into hardening cement foam.

3. A method according to any one of the claims 1 or 2, **characterized in that** the product foam (6) has a dry bulk density of 75 to 400 kg/m³, preferably less than 120 kg/m³, and a thermal conductivity of ≤ 0.045 W/mK.

4. A method according to any one of the claims 1 to 3, **characterized in that** at least one of the two foams is a protein hydrolysate, preferably based on keratin, or based on surfactants, or based on a combination of both.

5. A method according to any one of the claims 2 to 4, **characterized in that** as first cement a Portland cement with high grinding fineness and/or a strength class of 52.5 is preferably used, and calcium aluminate cement, preferably based on dodecacalcium heptaaluminate, is used as the hardener cement.

6. A method according to claim 5, **characterized in that** the calcium aluminate cement contains or is combined with a sulfate component.

7. A method according to claims 5 or 6, **characterized in that** fact that the Calcium aluminate cement is produced from a clinker, which is milled at the factory together with a solidification controller to a high grinding fineness.

8. A method according to any one of the claims 5 to 7, **characterized in that** the ratio of Portland cement to Calcium aluminate cement is located in a range with an upper limit of 5:1 and a lower limit of 1:1, preferably at 3:1.

9. A method according to any one of the claims 1 to 8, **characterized in that** a brick dust is added as a minor component of ≤ 20%, preferably 4 to 6%, to at least one of the two cement foams.

10. A method according to any one of the claims 1 to 9, **characterized in that** in the process steps a) and/or b) minor constituents of inert and/or pozzolanic and/or latent hydraulic and/or wetting, plastifying, water repellent or stabilizing additives are used.

11. A method according to any one of the claims 1 to 10, **characterized in that** the foaming takes place in an oscillating chamber without the use of a rotating tool.

12. A method according to any one of the claims 1 to 11, **characterized in that** the main components of the first binding paste are 70 kg of water, 76 kg of Portland cement 52.5 R and 3.9 kg of protein, and the main components of the second binding paste are 17 kg of water, 19 kg of calcium aluminate cement and 0.9 kg of protein.

13. A method according to any one of the claims 1 to 11, **characterized in that** the main constituents of the first binding paste are 70 kg of water, 76 kg of Portland cement 52.5 R and 3.9 kg of protein and the main constituents of the second binding paste are 23 kg of water, 25 kg Calcium aluminate cement and 1.3 kg of protein.

14. Use of a product foam, which is produced by the process steps according to any one of the claims 1 to 13, for filling cavities preferably within walls of various materials, for filling wall and ceiling elements, for block production and for the production of insulating material.

## Revendications

1. Procédé de fabrication d'une mousse inorganique avec une masse volumique inférieure à 400 kg/m³ **caractérisé par** les étapes suivantes :
a) Préparation d'un premier liant dont les composants principaux sont un premier ciment, de l'eau et au moins un premier agent moussant;
b) Préparation séparée d'un second liant qui diffère par sa composition du premier liant et dont les composants principaux sont un second ciment, de l'eau et au moins un second agent moussant;
c) Moussage du premier liant de telle sorte qu'il soit une première mousse de ciment;
d) Moussage du deuxième liant de telle sorte qu'il soit une deuxième mousse de ciment, dont la composition diffère de celle de la première mousse de ciment;
e) Regroupement et homogénéisation des premières et secondes mousses de ciment préparées séparément en une mousse de produits (6).

2. Procédé de fabrication selon la revendication 1 **caractérisé en ce qu'**un ciment durcissant est utilisé comme second ciment et le second liant est moulé pour obtenir une mousse de ciment durcissable.

3. Procédé selon l'une des revendications 1 ou 2, **caractérisé en ce que** la mousse de produit (6) a une masse volumique sèche de 75 à 400 kg/m³, de préférence inférieure à 120 kg/m³ et une conductivité thermique inférieure ou égale à 0,045 W/mK.

4. Procédé selon l'une des revendications 1 à 3, **caractérisé en ce que** l'un au moins des deux agents moussants est un hydrolysat de protéines, de préférence à base de kératine, ou à base de tensioactifs, ou à base d'une combinaison des deux.

5. Procédé selon l'une des revendications 2 à 4, **caractérisé en ce qu'**un ciment Portland, de préférence avec une finesse de broyage élevée et/ou une classe de résistance 52,5 est utilisé comme premier ciment et un ciment d'aluminate de calcium, de préférence à base de Dodeca hepta aluminate de calcium est utilisé comme ciment durcissant.

6. Procédé selon la revendication 5, **caractérisé en ce que** le ciment d'aluminate de calcium contient ou est combiné avec un composant sulfate.

7. Procédé selon les revendications 5 ou 6, **caractérisé en ce que** le ciment d'aluminate de calcium est produit à partir d'un clinker, qui est broyé en usine avec un contrôleur de solidification jusqu'à une finesse de broyage élevée.

8. Procédé selon l'une des revendications 5 à 7, **caractérisé en ce que** le rapport du ciment Portland au ciment d'aluminate de calcium est compris dans une gamme avec une limite supérieure de 5:1 et une limite inférieure de 1:1, de préférence 3:1.

9. Procédé selon l'une des revendications 1 à 8, **caractérisé en ce qu'**on ajoute à au moins une des deux mousses de ciment, une poussière de brique en tant que composant mineur d'une quantité ≤ 20%, de préférence de 4 à 6%.

10. Procédé selon l'une des revendications 1 à 9, **caractérisé en ce que** dans les étapes de traitement a) et/ou b) des additifs hydrauliques inertes et/ou pouzzolaniques et/ou hydrauliques latents et/ou mouillants, fluides, hydrofuges ou des stabilisateurs sont utilisés comme composants mineurs.

11. Procédé selon l'une des revendications 1 à 10, **caractérisé en ce que** le moussage a lieu dans une chambre oscillante sans l'utilisation d'un outil rotatif.

12. Procédé selon l'une des revendications 1 à 11, **caractérisé en ce que** comme principaux constituants du premier liant, 70 kg d'eau, 76 kg de ciment Portland 52,5 R et 3,9 kg de protéines sont utilisés et comme constituants principaux du second liant 17 kg d'eau et 19 kg de calcium 0,9 kg de protéine sont utilisés.

13. Procédé selon l'une des revendications 1 à 11, **caractérisé en ce que** les constituants principaux du premier liant sont 70 kg d'eau, 76 kg de ciment Portland 52,5 R et 3,9 kg de protéines et les constituants principaux du second liant sont 23 kg d'eau, 25 kg de ciment d'aluminate de calcium et 1,3 kg de protéine.

14. Utilisation d'une mousse de produit, préparée selon les étapes de procédé selon l'une des revendications 1 à 13, pour remplir des cavités et de préférence des cavités de divers matériaux de construction de murs, pour le remblayage d'éléments de mur et de plafond, pour la production de blocs et pour la production de matériaux isolants.
